(19) **Europäisches Patentamt**

**European Patent Office**

**Office européen des brevets**

(11) **EP 0 937 367 B1**

(12) **EUROPEAN PATENT SPECIFICATION**

(45) Date of publication and mention
of the grant of the patent:
**10.08.2005 Bulletin 2005/32**

(51) Int Cl.⁷: **H04Q 7/32**, H04Q 7/22,
H04Q 7/30, H04N 7/173,
H04N 7/50
// H04N5:14

(21) Application number: **98900799.2**

(22) Date of filing: **12.01.1998**

(86) International application number:
**PCT/SE1998/000030**

(87) International publication number:
**WO 1999/002003 (14.01.1999 Gazette 1999/02)**

(54) **REAL-TIME MOBILE VIDEO COMMUNICATION WITH LOW POWER TERMINALS**

MOBILE ECHTZEIT-VIDEOÜBERTRAGUNG MIT ENGERÄTEN MIT GERINGER LEISTUNG

VIDEOCOMMUNICATION MOBILE EN TEMPS REEL A TERMINAUX A FAIBLE PUISSANCE

(84) Designated Contracting States:
**AT CH DE DK ES FI FR GB IT LI NL**

(30) Priority: **02.07.1997 SE 9702544**

(43) Date of publication of application:
**25.08.1999 Bulletin 1999/34**

(73) Proprietor: **Forskarpatent i Linköping AB**
**581 83 Linköping (SE)**

(72) Inventors:
• **FORCHHEIMER, Robert**
**S-584 22 Linköping (SE)**
• **LI, Haibo**
**S-584 31 Linköping (SE)**

(74) Representative: **Berglund, Erik Wilhelm**
**Berglunds Patentbyra AB**
**Aspebraten**
**590 55 Sturefors (SE)**

(56) References cited:
**GB-A- 2 222 338**          **US-A- 4 703 350**
**US-A- 5 550 756**

**Description**

**1 Background of the invention**

1.1 Field of the Invention

Mobile communication is currently one of the most emerging markets and is expected to continue to expand. Today the functionalities of mobile communications are very limited. Only speech or data can be handled. It is expected that image information, especially real-time video information, will greatly add to the value of mobile communication. Low cost mobile video transmission is highly required by many practical applications, e.g. mobile visual communication, live TV news report, mobile surveillance, telemedicine, virtual reality, computer game, personal travel assistance, underwater visual communication, space communication, etc. However, there are indeed some problems with inclusion of live video information into mobile communications. Different from speech information, video information normally needs greater bandwidth and processing performance. In contrast, the mobile terminals of today and tomorrow suffer from certain limitations, e.g.

1 mobile terminals usually have limited power, typical transmission output power levels, 10 microwatts - 1 watt.
2 the terminals have limited capability to wirelessly transmit data, 1kbls -10kbs/

Based on these facts, real-time mobile video transmission can only be achieved when a high efficient compression algorithm with very low implementation complexity can be implemented.

**1.2 Description of the Prior Art**

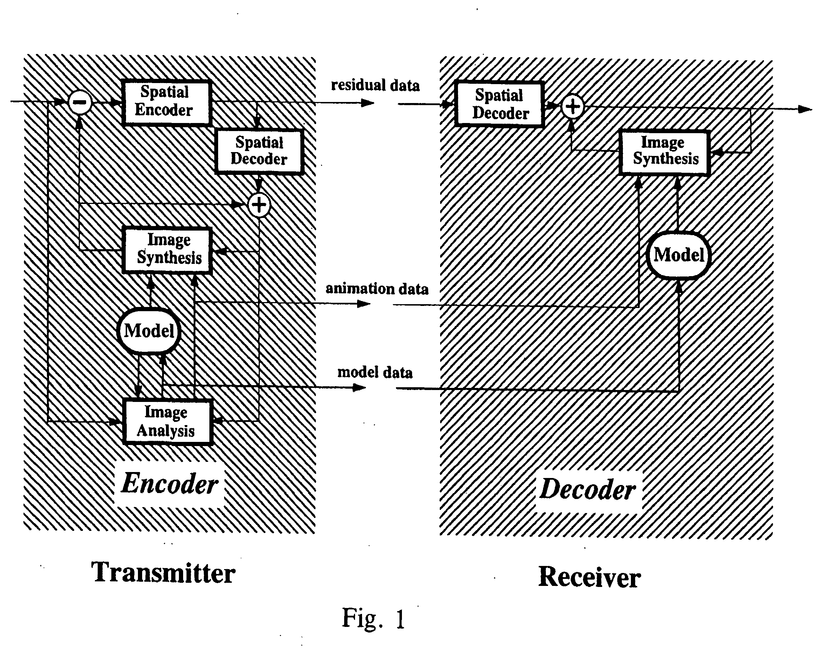

Methods to obtain mobile video communication are for instance known from US-A 5 550 756 and US-A-4 703 350.
To compress motion pictures, a simple solution is to compress pictures on a frame by frame basis, e.g by means of the JPEG algorithm. This will result in a rather high bitrate although at low complexity. To achieve high compression efficiency, we need to employ advanced video compression algorithms. Up to now, different types of video compression algorithms have been developed. Typical examples include **H.263-type block-based, 3D model-based,** and **segmentation based coding algorithms.** Although based on different coding principles, these algorithms adopt a similar coding structure, namely the closed-loop coding structure. This unified coding structure is shown in Fig. 1. In this structure, important blocks are **image analysis, image synthesis, spatial encoder/decoder and modeling.** Video compression algorithms differ themselves in the image analysis and synthesis part. Amongst the blocks, the most computation consuming one is image analysis. The following are typical image analysis tasks performed in different algorithms:

**H.263 coding algorithm** The main function of the image analysis part in H.263 algorithm is to perform motion estimation. For motion estimation, commonly a block matching scheme is used. Unfortunately, motion estimation is very time- and power-consuming although the employed motion model is very simple. For example, if a simple correlation measure is used, the sum of the absolute value of differences(SAD) is computed. For a full search over a +- 7 displacement range at QCIF(176x144 pixels) resolution and 10frames/s, the SAD computation would have to be performances over 57 million times each second. With increased search range and a finer resolution of motion vectors is needed, the computation will be greatly increased.

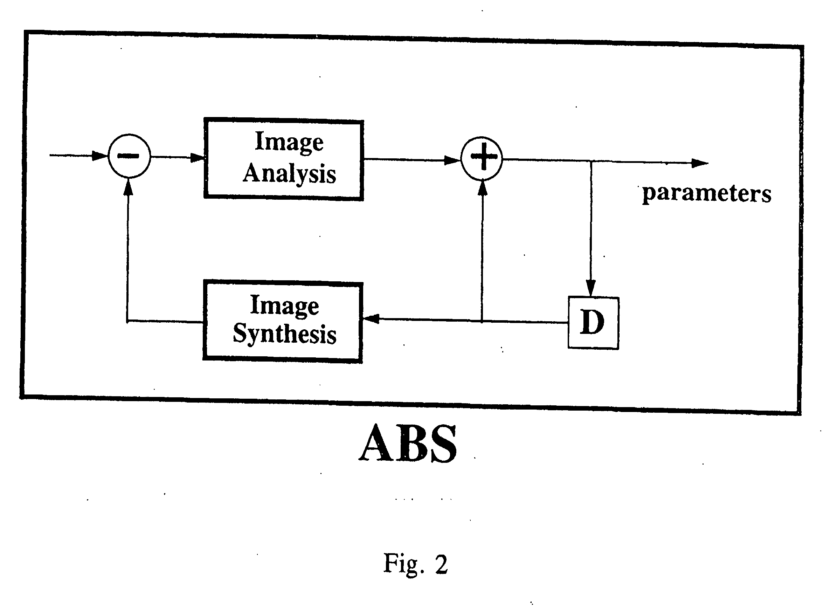

**Model-based coding algorithm** The task of image analysis here is to extract animation parameters based on models. The models can be given a prior or to be built during coding processing. Since the animation parameters are related to 3 dimensional information, e.g. 3D motion and shape and the observable is 2D image information, a good strategy is needed. A powerful tool based on the analysis by synthesis principle (ABS) is shown in Fig.2. Obviously, this is the second closed-loop appearing in the encoder. The purpose of using this loop is to aid or verify image analysis. This is done by means of the image synthesis block by comparing with the reference image. Therefore, the complexity of image analysis is rather complicated. In contrast, image synthesis is much simpler. In addition, in the beginning of the session, the analysis part needs to do "initial works ", such as, object location or identification, feature points localization, the fitting of a generic model to the specific object appearing in the scenes, and initial pose estimation. This type of work gives rise to a very heavy computational load.

**Segmentation-based coding algorithm** The task of image analysis here is to segment images into objects according to assumed definition of objects, to track the objects and to estimate their motion or shape parameters. The commonly used models are 2D planar object with affine motion, flexible 3D objects with 3D motion. Obviously, the estimation of the motion and shape parameters associated with these models needs sophisticated operations.

In addition, another heavy task carried out by the image analysis is to maintain, update and choose the models.

In summary, two important observations about the image analysis part in the advanced video compression algorithms are that

(1) Due to the involvement of image analysis, the complexity of the encoder is much higher than that of the decoder.
(2) computational loads caused by image analysis in the beginning is usually heavier than that during the coding process. This requires that the encoder has a strong peak computational ability.
(3) The decoder must operate exactly as the encoder does. That is, the decoder is passively controlled by the encoder

These points make advanced video algorithms difficult to implement in low power terminals to achieve live video communication.

## 2 Summary of the invention

To achieve video communication, very low power terminals should employ video compression algorithms with the following features:

**(1)** low complexity of the encoder and decoder
**(2)** high compression efficiency
**(3)** the operation of the encoder should be remotely controlled.

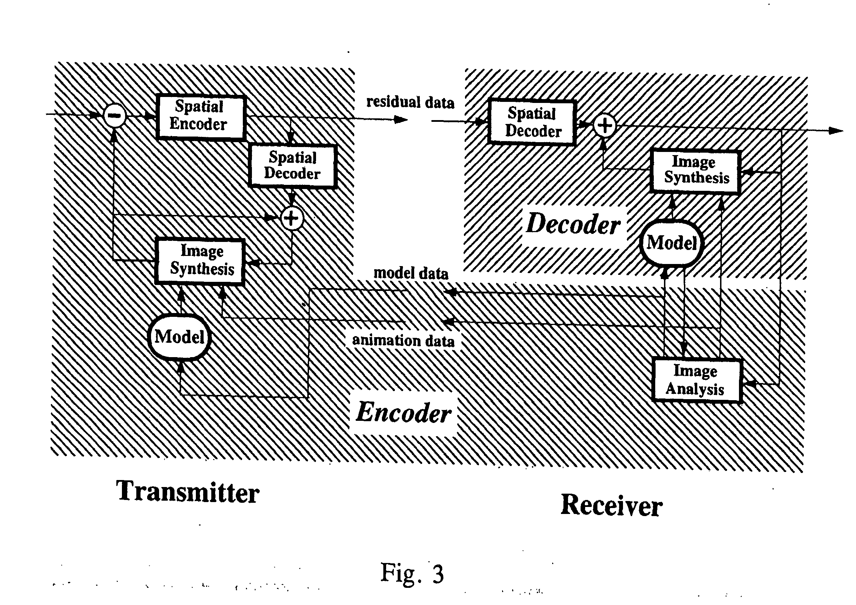

To satisfy these requirements, it is not necessary to reinvent the wheel. This invention will make it possible to use current or future video compression algorithms to achieve video communication with low power terminals.
In accordance with the invention the transfer of moving pictures from a picture sending station, wherein a predicted picture frame is obtained through image analysis and then compared with a corresponding actual picture frame, a deviation signal is generated corresponding to the difference between the actual and the predicted frames and wherein the deviation signal is sent for compensation to a compensation prediction unit, characterized in that the image analysis is carried out outside the picture sending station and in that predicted picture frame information generated by image analysis is sent to the picture sending station.
The key idea of this invention is to move the image analysis part to the receiver or an intermediate point in the network. This is illustrated in Fig.3. In this invention, we distinguish two different concepts: transmitter/receiver and encoder/decoder, which are mixed together in conventional video communication systems. In this invention, the encoder does not necessarily sit in the transmitter. Instead, a main part of the encoder remains in the transmitter while the computation consuming part, image analysis is put in the receiver. In this way, image analysis is performed in the receiver instead of the transmitter. The generated animation and model data are then sent back to the transmitter to run normal encoding processing. Therefore, the encoder is still a virtually complete system but physically is distributed across both the transmitter and receiver. Obviously, implicit conditions to enable such communication is that the receiver has enough power to perform complex image analysis and the latency between the receiver and transmitter should be low. In fact, the second condition, low latency is not necessary in our invention if model-based or object-oriented coding schemes are used. The key is the first condition, which is easily satisfied in the applications mentioned in section 1. For example, a high performance computer or server can be used to communicate with these low power terminals. In principle, this invention enables a supercomputer performance at a very low cost.
Furthermore, this invention is also supported by communication possibility. According to the Shannon information theory, the channel capacity is determined by

$$C = Blog(1 + \frac{S}{N})  \qquad (1)$$

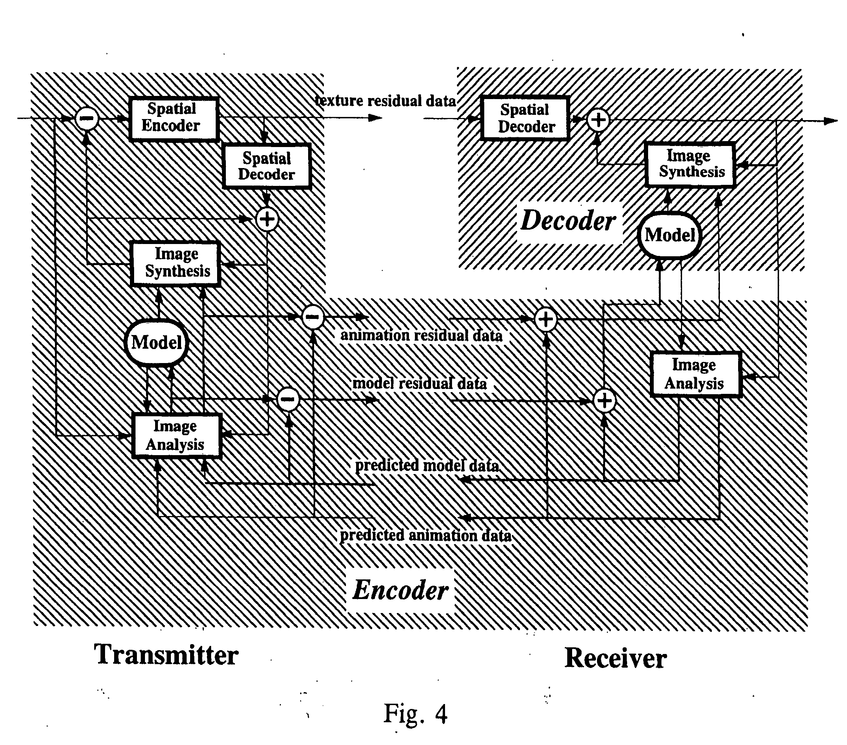

The increase in the signal power will increase the channel capacity. Since at the receiver side, sufficient power is available, it is no problem to transmit model and animation data to the transmitter.
In the case that the transmitter has certain computational ability and the latency is low, a second configuration scheme can be employed, which is illustrated in Fig.4. In this scheme two analysis blocks are employed. These two analysis blocks are either {\sf hierarchical}, e.g. the image analysis part in the receiver performs rough estimation of animation and model data while the one in the transmitter refines the obtained results from the receiver, or {\sf separate}, e.g. the analysis in the transmitter is in charge of tracking while the one in the receiver is in charge of initial estimation.

### 3 Description of the preferred embodiments

In our invention, the receiver will take part in the coding processing. The image analysis is performed in the receiver. In comparison with the original scheme, a significantly different part is that the input to the image analysis block is no longer the current frame but the previous frame. Therefore, a key issue for image analysis is its ability to predict the parameters which are normally from the current frame. Assume that previously decoded frames, $I^*_{t-1}$ and $I^*_{t-2}$ are available at the receiver side and the frame $I^*_{t-1}$ is also available at the transmitter side. Now the task is to transmit the current frame $I^*_t$.

Image analysis is performed by using the previously decoded frames $I^*_{t-1}$ and $I^*_{t-2}$ based on the model $V^*_{t-1}$ in the receiving side:

$$[\bar{A}_t, \bar{M}_t]^T = analysis(I^*_{t-1}, I^*_{t-2}, V_{t-1}) \qquad (2)$$

where $\bar{A}_t$ are the animation data and $\bar{M}_t$ are the model data which will be used to update the employed model. The obtained animation data and model data are compressed and then transmitted back to the transmitter.

At both the transmitter and receiver the employed model is updated by the model data

$$\bar{V}_t = model\_update(V_{t-1}, \bar{M}_t) \qquad (3)$$

Here we distinguish two cases:

**case I: no refinement**

$$A_t = \bar{A}_t$$
$$M_t = \bar{M}_t$$
$$V_t = \bar{V}_t \qquad (4)$$

**case II: refinement**
*A new image analysis taking the current frame as input is performed to refine the results estimated from previously decoded frames*

$$[A_t, M_t]^T = analysis\_refine(I_t, I^*_{t-1}, \bar{A}_t, \bar{M}_t, \bar{V}_t) \qquad (5)$$

*and the employed model is also refined*

$$V_t = model\_refine(\bar{V}_t, M_t) \qquad (6)$$

At the transmitter, the prediction of the current frame can be rendered by an image synthesis operation based on the updated model $V_t$,

$$I'_t = render(A_t, V_t, I^*_{t-1}) \qquad (7)$$

The texture residual signal is

$$\delta I_t = I_t - I'_t \qquad (8)$$

The residual information will be compressed by applying spatial coding methods, e.g. DCT on the residual signal.

$$R_t = DCT(\delta I_t) \tag{9}$$

Note that in case II the animation and model residual signals $\delta A_t$ and $\delta M_t$ are also needed to be compressed and transmitted to the receiver. These two residual signals are defined as

$$\delta A_t = A_t - \tilde{A}_t \tag{10}$$

and

$$\delta M_t = M_t - \tilde{M}_t \tag{11}$$

## 4 Specified techniques

### 4. 1Motion prediction technique for two-way mobile communication

In two-way mobile communication, one of the main problems is that the available channel capacity is very limited, e.g. 9.6kb/s for GSM standard. To transmit video through the mobile channel, advanced video coding algorithms must be employed. H.263, a video coding algorithm standardized by ITU[1] is very suitable for this purpose. This standard coding algorithm can also be described by the scheme shown in Fig.1. Since H.263 is a block-based video compression algorithm, from table 1, we will see that *image analysis* corresponds to *block-based motion estimation}, image synthesis* to *block based motion compensation.* There is no information about modelling.

The main problem with this kind of configuration is that the limited power available in the mobile terminals prohibits complicated signal processing operations, e.g. motion estimation. In addition, both the transmitter and receiver have low power. Fortunately, there is no direct communication necessary for these two low power terminals. The two-way communication is carried out through basestations where sufficient power is available.

A practical solution is to move the motion estimation part from the transmitter to the base station. That is, the encoder virtually sits across the transmitting terminal and the base station. Now the task of image analysis is to estimate animation data in the base station. Since block-based algorithm is employed, the animation data contains motion information only.

Assume that previously decoded frames, $I^*_{t-1}, I^*_{t-2}$, are available at the base station and the frame $I^*_{t-1}$ is also available at the transmitter and the receiver. To make a prediction of the current frame, motion vectors for the current frame must be provided. This is done in the base station where motion prediction has to be made

$$\tilde{A}_t = \text{analysis}(I^*_{t-1}, I^*_{t-2}) \tag{12}$$

The obtained motion information $\tilde{A}_t$ is then transmitted to both the transmitter and the receiver.

With the obtained motion vectors $\tilde{A}_t$, the motion vectors to be used can be obtained by either $A_t = \tilde{A}_t$ or $A_t = analysis\_refine(I_t, I^*_{t-1}, \tilde{A}_t)$ depending on which schemes are used. Thus, a motion compensated prediction of the current frame is given by

$$I'_t = render(A_t, I^*_{t-1}) \tag{13}$$

Obviously, the key to this technique lies in the performance of motion prediction (12).

Now, we present a new technique to perform motion prediction. The core part in this invention is the employment of a new search strategy which allows us to make use of existing search methods, e.g. *block-matching algorithm* to achieve motion prediction.

Assume that a block-matching scheme is employ. To predict the current frame $I_t$ using the previous $I^*_{t-1}$, the current frame must be segmented into rectangular blocks first and then one displacement vector (u*,v*) is to be esti-

mated per block through

$$\min_{u,v} \sum_{(n_1,n_2)\in R} |I_t(n_1,n_2) - I^{\bullet}_{t-1}(n_1 - u, n_2 - v)|^2 \qquad (14)$$

where $R$ is a rectangular block centered on $(n_1,n_2)$

Since $I_t$ is not available in the base station, the motion vector $(u^*,v^*$ can not be recovered at time $t$ from the constraint (14). To achieve motion prediction, the interframe motion is assumed to follow a physical motion model. Under this assumption, we have

$$I_t(n_1, n_2) \approx \overset{*}{I}_{t-1}(n_1-u^*,n_2-v^*) \approx \overset{*}{I}_{t-2}(n_1\text{-}au^*,n_2\text{-} bv^*) \qquad (15)$$

where $a$ and $b$ are constants which are specified by the assumed motion model. When a uniform motion is assumed, $a=2$ and $b=2$.

Now the constraint (14) can be rewritten as

$$\min_{u,v} \sum_{(n_1,n_2)\in R} |I^{\bullet}_{t-2}(n_1 - au, n_2 - bv) - I^{\bullet}_{t-1}(n_1 - u, n_2 - v)|^2 \qquad (16)$$

The motion vector $u^*,v^*$ can be estimated from the new constraint.

The motion vectors $u^*,v^*$ are the animation data $\tilde{A}_t$ specified in equation (12). If no refinement is performed, then $u=u^*$ and $v=v^*$. Now the motion compensated prediction of the current frame can be given

$$\overset{\cdot}{I}_t(n_1,n_2) = render(A_t,\overset{*}{I}_{t-1}(n_1,n_2)= \overset{*}{I}_{t-1}(n_1\text{-} u,n_2\text{-}v) \qquad (17)$$

If a refinement operation is performed, a similar result can be obtained.

### 4.2 3D Motion Prediction Technique for Object-Oriented Video Coding Applications

In object-oriented video coding schemes, an important image analysis task is to estimate the 3D motion of the objects appearing in the scene. For example, in videophone and video conference scenes, a typical object is the human head. The task there is to extract two types of information: face definition parameters and face animation parameters. They correspond to model data and animation data defined in this invention. Advanced computer vision techniques are usually used to extract these data. As is known, these algorithms are computationally intensive, which usually can not be afforded by low power terminals. Our invention can handle this problem by moving the image analysis part to the receiver. The core of this technique is to employ Kalman filtering to predict 3D motion of objects appearing in current frame.

Assume the 3D motion of objects can be modeled as a dynamic process

$$A_{t+1} = f(A_t) + \xi \qquad (18)$$

where the function $f$ models the dynamic evolution of the state vector $A_t$ at time $t$. The measurement process is

$$Y_t = h(A_t) + \eta \qquad (19)$$

where the sensor observations $Y$ are a function $h$ of the state vectors and time. Both $\zeta$ and $\eta$ are white noise processes having known spectral density matrices.

In the specific applications, the state vector $A_t$ consists of the motion parameters to be estimated and the observation vector $Y_t$ contains the available measurements, like pixel-based, feature-based measurements. The function $f$ may be a discrete-time Newtonian physical model of 3D motion.

Using Kalman filtering, we can obtain the optimal linear estimate $\tilde{A}_t$ of the state vector $A_t$

$$\hat{A}_t = A_t^* + K_t(Y_t - h(A_t)) \tag{20}$$

where $A_t^*$ is the prediction of the state vector $A_t$.

The prediction of the state vector $A_{t+1}$ at the next time step is

$$A_{t+1}^* = f(\hat{A}_t) \tag{21}$$

if the measurement $Y$, at time $t$ is available.

Since the image analysis part is moved to the receiver, what is available there is the measurement $Y^{t-1}$. Therefore, we can only obtain the optimal linear estimate $\tilde{A}_{t-1}$ of the state vector $A_{t-1}$

$$\hat{A}_{t-1} = A_{t-1}^* + K_{t-1}(Y_{t-1} - h(A_{t-1})) \tag{22}$$

With it the prediction of motion parameters of the current frame is obtained

$$A_t^* = f(\hat{A}_{t-1}) \tag{23}$$

The predicted motion parameters $A_t^*$ are sent to the transmitter. The transmitter synthesizes a prediction image $I_t'$ of the current frame, then the residual signal between the prediction and current frame is compressed and transmitted to the receiver. The receiver reconstructs the current frame with the received residual signal. Then the current measurement $Y_t$ can be extracted. With $Y_t$, the prediction of the next frame can be derived by using (20)(21).

More specifically, this technique can be used for three cases:

> **Case I:** the terminal has weak computational ability and the connection from the receiver to the terminal is of low delay}
> *The predicted motion parameters are used in the terminal and only texture residual signal is transmitted to the receiver.*

> **Case II:** the terminal has certain computational ability and the connection from the receiver to the terminal is of low delay
> *The predicted motion parameters will be refined by using the current frame. The refined motion parameters are used to predict the current frame. The texture residual signal is transmitted to the receiver. Additional residual signals between the refined motion parameters and predicted ones are also transmitted to the receiver.*

> **Case III:** the connection from the receiver to the terminal is of long (or irregular) delay}
> *No information is sent from the transmitter to the receiver for a while. The preaicted motion parameters are used to drive animation at the receiver.*

The enclosed drawings show:

Fig. 1:    A unified video compression structure.
Fig. 2:    Image analysis based on the analysis by synthesis principle (ABS)
Fig. 3:    New implementation scheme where image analysis is performed at the receiver
Fig. 4:    Alternative implementation where image analysis is performed at both the transmitter and the receiver.}

**Claims**

1.  Method for the transfer of moving pictures from a picture sending station, wherein a predicted picture frame is obtained through image analysis and then compared with a corresponding actual picture frame, a deviation signal is generated corresponding to the difference between the actual and the predicted frames and wherein the deviation signal is sent for compensation to a compensation prediction unit, **characterized in that** the image analysis is carried out outside the picture sending station and **in that** predicted picture frame information generated by image analysis is sent to the picture sending station.

2. Method according to claim 1, **characterized by** sending the deviation signal also to a picture receiving station or terminal together with the predicted picture frame information.

3. Method according to claim 1 or 2, **characterized in** the image analysis being motion prediction.

4. Method according to claim 2, **characterized in that** the image prediction is carried out at a base station in a cellular telephone network or at a central station in a wired telephone network and **in that** the communication between the compensation prediction unit and either the picture sending station or the picture receiving station respectively, is via said wired or cellular telephone networks.

5. Method according to any of the preceding claims, **characterized in** a regular updating of the entire predicted picture frame or parts thereof.

6. Method according to claim 4, **characterized in that** the deviation signal flow from the picture sending station is smaller than or equal to the predicted picture frame signal flow from the base station or central station to the picture sending station.

7. Method according to claim 1 or 2, **characterized in** the image analysis being carried out in a picture receiving station or an intermediate point in a network.

8. Communication network comprising means for carrying out the steps of a method for the transfer of moving pictures from a picture sending station, in accordance with any of the claims 1 to 8, **characterized in that** the compensation prediction unit for image analysis is arranged in a base station in a mobile telephone network or in a central station in a wired telephone network.

**Patentansprüche**

1. Verfahren für den Transfer von Filmen von einer Bildsendestation, wobei ein vorhergesagter Bildrahmen durch eine Bildanalyse erhalten wird und dann mit einem entsprechenden tatsächlichen Bildrahmen verglichen wird, ein Abweichungssignal entsprechend dem Unterschied zwischen dem tatsächlichen und dem vorhergesagten Rahmen erzeugt wird, und wobei das Abweichungssignal zur Kompensation zu einer Kompensations-Vorhersageeinheit gesendet wird, **dadurch gekennzeichnet, dass** die Bildanalyse außerhalb der Bildsendestation ausgeführt wird und dass durch eine Bildanalyse erzeugte Information für einen vorhergesagten Bildrahmen zur Bildsendestation gesendet wird.

2. Verfahren nach Anspruch 1, **gekennzeicnet durch** Senden des Abweichungssignals auch zu einer Bildempfangsstation oder einem Endgerät zusammen mit der Information für einen vorhergesagten Bildrahmen.

3. Verfahren nach Anspruch 1 oder 2, **dadurch gekennzeichnet, dass** die Bildanalyse eine Bewegungsvorhersage ist.

4. Verfahren nach Anspruch 2, **dadurch gekennzeichnet, dass** die Bildvorhersage bei einer Basisstation in einem zellularen Telefonnetz oder bei einer zentralen Station in einem verdrahteten Telefonnetz ausgeführt wird und dass die Kommunikation zwischen der Kompensations-Vorhersageeinheit und jeweils entweder der Bildsendestation oder der Bildempfangsstation über das verdrahtete oder das zellulare Telefonnetz erfolgt.

5. Verfahren nach einem der vorangehenden Ansprüche, **gekennzeichnet durch** ein regelmäßiges Aktualisieren des gesamten vorhergesagten Bildrahmens oder von Teilen davon.

6. Verfahren nach Anspruch 4, **dadurch gekennzeichnet, dass** der Abweichungssignalstrom von der Bildsendestation kleiner als der oder gleich dem Vorhersagebildrahmensignalstrom von der Basisstation oder der zentralen Station zur Bildsendestation ist.

7. Verfahren nach Anspruch 1 oder 2, **dadurch gekennzeichnet, dass** die Bildanalyse in einer Bildempfangsstation oder einer Zwischenstelle in einem Netz ausgeführt wird.

8. Kommunikationsnetz mit einer Einrichtung zum Ausführen der Schritte eines Verfahrens für den Transfer von Filmen von einer Bildsendestation nach einem der Ansprüche 1 bis 7, **dadurch gekennzeichnet, dass** die Kompensations-Vorhersageeinheit für eine Bildanalyse in einer Basisstation in einem Mobiltelefonnetz oder in einer zentralen Station in einem verdrahteten Telefonnetz angeordnet ist.

**Revendications**

1. Procédé de transfert d'images mobiles à partir d'une station émettrice d'images, dans lequel une trame d'images prédite est obtenue à travers une analyse d'images puis comparée à une trame d'images effective correspondante, un signal de déviation est généré correspondant à la différence entre la trame effective et la trame prédite, et dans lequel le signal de déviation est envoyé pour compenser une unité de prédiction de compensation, **caractérisé en ce que** l'analyse d'images est effectuée en dehors de la station émettrice d'images et **en ce que** l'information de la trame d'images prédite générée par l'analyse d'images est envoyée à la station émettrice d'images.

2. Procédé selon la revendication 1, **caractérisé par** l'envoi du signal de déviation également à une station réceptrice d'images ou terminale, en même temps que l'information de trame d'images prédite.

3. Procédé selon la revendication 1 ou 2, **caractérisé en ce que** l'analyse d'images est une prédiction de mouvement.

4. Procédé selon la revendication 2, **caractérisé en ce que** la prédiction d'images est effectuée à une station de base dans un réseau téléphonique cellulaire ou à une station centrale dans un réseau téléphonique câblé, et **en ce que** la communication entre l'unité de prédiction de compensation et la station émettrice d'images ou la station réceptrice d'images respectivement, s'établit à travers ledit réseau téléphonique câblé ou ledit réseau téléphonique cellulaire.

5. Procédé selon l'une quelconque des revendications précédentes, **caractérisé par** une mise à jour régulière de l'ensemble de la trame d'images prédite ou de parties de celle-ci.

6. Procédé selon la revendication 4, **caractérisé en ce que** le débit de signal de déviation provenant de la station émettrice d'images est inférieur ou égal au débit du signal de trame d'images prédit provenant de la station de base ou de la station centrale vers la station émettrice d'images.

7. Procédé selon la revendication 1 ou 2, **caractérisé en ce que** l'analyse d'images est effectuée dans une station réceptrice d'images ou en un point intermédiaire d'un réseau.

8. Réseau de communication comprenant un moyen pour effectuer les étapes d'un procédé de transfert d'images mobiles depuis une station émettrice d'images selon l'une quelconque des revendications 1 à 8, **caractérisé en ce que** l'unité de prédiction de compensation pour l'analyse de l'image est agencée dans une station de base dans un réseau téléphonique mobile ou dans une station centrale dans un réseau téléphonique câblé.

**Transmitter**        **Receiver**

Fig. 1

EP 0 937 367 B1

ABS

Fig. 2

Fig. 3

Fig. 4